# NEW EUROPEAN PATENT SPECIFICATION

(11) **EP 2 144 529 B2**
(45) Date of publication and mention of the opposition decision: **12.04.2023**
(45) Mention of the grant of the patent: 29.07.2015
(21) Application number: 08751152.3
(22) Date of filing: 07.05.2008
(51) Int. Cl.: A46B 9/04, A46B 15/00, A46D 1/00, A46B 9/06

(54) **ORAL HYGIENE IMPLEMENTS**
MUNDPFLEGEGERÄTE
ACCESSOIRES D'HYGIÈNE BUCCALE

(30) Priority: 07.05.2007 US 928012 P
(43) Date of publication of application: 20.01.2010
(73) Proprietor: The Gillette Company LLC, Boston, MA 02127 (US)
(72) Inventor: MEADOWS, Mark, Stephen, Boston, Massachusetts 02121 (US); CHENVAINU, Alexander, Timothy, Sudbury, Massachusetts 01776 (US); BLAIN, Christopher, Petaluma, California 94975-0072 (US); CHRISTMAN, Thomas, Aurele, Lexington, Massachusetts 02420 (US); CLAIRE-ZIMMET, Karen, Lynn, Waltham, Massachusetts 02452 (US)
(74) Representative: Elkington and Fife LLP
(86) International application number: PCT/IB2008/051793
(87) International publication number: WO 2008/135953

(56) References cited:
- WO-A-98/57569
- WO-A-2006/020698
- WO-A-2006/071652
- DE-A1-102005 027 982
- US-A1- 2007 056 128

## Description

### TECHNICAL FIELD

This disclosure relates to oral hygiene implements that include elastomeric elements.

### BACKGROUND

Most humans suffer or have suffered from tooth decay and/or gingivitis caused by bacteria in the mouth. As a result, decreasing the amount of bacterial plaque in the mouth has long been a target of persons working in the oral care field. A common way of minimizing the plaque in the mouth is to brush and floss the teeth regularly. Mouthrinses are often used to augment flossing and brushing.

The benefits of frequent brushing can be accompanied by, in some instances, deleterious side effects, such as irritation, soft and hard tissue abrasion and even recession of the gums. In part, these side effects result from an excessive force applied by the user to their gums via their toothbrush.

US 2007/0056128 discloses a toothbrush having elastomeric elements.

### SUMMARY

This disclosure relates to toothbrushes or toothbrush refill that include elastomeric elements and to methods of making the same. To this effect, a toothbrush or toothbrush refill according to claim 1 is provided.

The oral hygiene implements described herein include many elastomeric elements that include a large number of "sharp" edges (edges having a small tip radius) formed of a compliant elastomeric material for enhanced cleaning with reduced irritation and/or abrasion. The implements can include several-to-many different shaped elastomeric elements, e.g., two, three, four, five, six, seven, eight, or even ten or more different shaped elements. Each element can be formed of the same material or each element can be formed of a different material such that the entire field of elements includes several-to-many different materials, e.g., two, three, four, five, six, seven, eight, or even ten or more different materials. The many different textures that are provided by such a construction can provide a feeling that can be reminiscent of more traditional bristled implements, allowing for the new implements to be readily accepted into a consumer's routine.

The disclosure features toothbrushes or toothbrush refills, that include a head portion sized for insertion into a human mouth. The head portion includes a base and a plurality of elastomeric elements extending from the base that each define one or more edges. A total number of edges defined by the plurality of elastomeric elements having a tip radius of less than about 0.1524 mm (0.006 inch) is greater than about 250.

In another aspect, the disclosure features oral hygiene implements that include a head portion sized for insertion into a human mouth that includes a base and a plurality of elastomeric elements extending from the base that define a field of elastomeric elements. The field includes a first elastomeric element that includes a first elastomeric material and a second elastomeric element different than the first elastomeric element and including a second elastomeric material. The total number of edges defined by the plurality of elastomeric elements having a tip radius of less than about 0.006 inch is greater than about 250.

In another aspect, the disclosure features oral hygiene implements that include a head portion sized for insertion into a human mouth. The head portion includes a base and a plurality of elastomeric elements extending from the base defining a field of elastomeric elements. The field includes a first elastomeric element including a first elastomeric material and a second elastomeric material surrounding the first elastomeric material. For example, second elastomeric material, which can be a relatively soft elastomeric material, can completely surround the first elastomeric material, which can be a harder elastomeric material.

In another aspect, the disclosure features a toothbrush or toothbrush refill that include a head portion sized for insertion into a human mouth. The head portion includes a base and a plurality of elastomeric elements extending from the base defining a field of elastomeric elements. The field includes a first elastomeric element that includes a first elastomeric material and a second elastomeric element that includes a second elastomeric material. The first elastomeric element has a first coefficient of friction and the second elastomeric element has a second coefficient of friction different than the first coefficient of friction. The first elastomeric element can have a lower wet coefficient of friction, as measured using human saliva and an atomic force microscope, than the second elastomeric element. A lower coefficient of friction is advantageous for sliding between teeth, which the higher coefficient of friction is advantageous for scrubbing the teeth.

In some implementations, the total number of edges is greater than about 300, such as greater than about 400, 500, 600, 700, 800, 900, 1000, 1250, 1500, or even more, such as greater than about 2000 or 3000. Sharp edges can enhance the cleaning ability of the implements, but since the edges are formed of an elastomeric material, they are also generally gentle on tissues.

To maximize the exposure of the edges, an intra- and/or inter-element spacing of an edge to its nearest neighbor is from about 0.254 mm (0.010 inch) or more, such as greater than 0.015 inch, 0.020 inch, 0.025 inch, 0.030 inch, 0.040 inch, or 0.050 inch or more, such as greater than about 0.060 inch, 0.075 inch, 0.085 inch, 0.10 inch, 0.125 inch, 0.150 inch, 0.175 inch, or even greater than 0.20 inch.

In some embodiments, one or more elastomeric elements have a long axis running in a direction of extension, and the edges are defined along the direction of extension. In other embodiments, one or more elastomeric elements have a long axis running in a direction of extension, and the edges are defined in a direction perpendicular to extension. In still other embodiments, edges are defined along and perpendicular to the long axis running in the direction of extension.

Generally, the elastomeric elements are configured to maximize cleaning and/or gum massaging, while minimizing trauma to the oral cavity.

The plurality of elastomeric elements can include, e.g., one, two, three, four, five, six, seven, eight, nine or even ten different elastomeric elements, e.g., that differ in shape, size, length/height, and/or material.

For example, in some implementations, all the elements can have the same shape, but can each be formed of a different material and/or a different material hardness.

In some implementations, the plurality of elastomeric elements can include, e.g., a first elastomeric element that includes a first elastomeric material and a second elastomeric element that includes a second elastomeric material. The plurality of elastomeric elements can, e.g., further include a third elastomeric element that includes a third elastomeric material, a fourth elastomeric element that includes a fourth elastomeric material, a fifth elastomeric element that includes a fifth elastomeric material or even a sixth elastomeric element that includes a sixth elastomeric material.

Any one or more of the elastomeric elements described herein has e.g., a Shore A hardness of about 8 Shore A to about 95 Shore A, such as between about 35 Shore A to about 92 Shore A.

Any elastomeric element described herein can be formed of a thermoplastic or a crosslinked material (a thermoset material). For example, the elastomer can be one or more styrenic copolymers, thermoplastic polyurethanes, silicones, polyether-amides, polyether-polyesters, or mixtures of these and other elastomers.

Any elastomeric material described herein can include one or more fillers. For example, the filler can be or can include oil, e.g., mineral oils, abrasives, tackifiers, plasticizers or mixtures of these and even others.

For example, any elastomeric element can have a first maximum transverse cross-sectional thickness of between about 0.003 inch and about 0.250 inch, such as between about 0.010 inch and about 0.10 inch. In some implementations, elements also include a second maximum transverse dimension perpendicular to the first dimension of between about 0.003 inch and about 0.10 inch.

The elements are not limited in shape. For example, any element can be in the form of a ring, a projections, a fin, a ladder, a cup, or a curtain.

For example, any elastomeric element can have a transverse cross-section (taken perpendicular to the direction of extension) that is generally or substantially circular, triangular, rectangular, square or sinusoidal in form.

Any oral implement described herein can also further include one or more bristles, such as bristles arranged in one or more turfs, extending from the base.

Any oral implement described herein can be in the form of a manual or power toothbrush. For example, in some advantageous implementations, the implement is a power product in which the head portion and/or base portion is configured to be vibrated and/or oscillated, such as by an electrically driven motor in communication with the head portion and/or base portion.

As used herein, "an edge" is a line at which two surface intersect, or a border at which a surface terminates.

As used herein, "an elastomer" is a material that has an elongation at break or greater than about fifty percent and a Shore A hardness of less than about 97.

Aspects and/or implementations may have any one or more of the following advantages. The toothbrush or toothbrush refill described herein include elastomeric elements that include a large number of "sharp" edges (edges having a small tip radius) formed of a compliant material for enhanced cleaning with reduced abrasion. The edges can be defined on tips and along the elastomeric element, providing a cleaning structure that cleans at its tips and along its sides. The implements can include several different shaped elastomeric elements, e.g., two, three, four, five, six, seven, eight, or even ten or more different shaped elements, that are optionally formed of several different materials, e.g., one, two, three, four, five, six, seven, eight, or even ten or more different materials. Such a construction can provide many different textures in a user's mouth. The many different textures provided can be reminiscent of more traditional bristled implements, allowing for the novel implements to be readily accepted into a consumer's routine. The geometry and texture of each element can be optimized for location in a brushing field, which can lead to enhanced massaging and/or cleaning. The oral hygiene implements can work-synergistically with cleaning and polishing materials, such as toothpastes, for enhanced polishing and cleaning. For example, an elastomeric element in the shape of a cup can enhance polishing and/or whitening by holding the abrasives to tooth surfaces. The implements described herein can have only elastomeric elements, which can be relatively easily molded, e.g., cast or injection molded, or extruded. Due to their compliant nature, elastomeric elements tend to self-regulate stresses applied to cleaning sites, which can minimize damage from excessive brushing forces, e.g., that can lead to gum recession. When the oral hygiene implements, e.g., toothbrushes, include only elastomeric elements in their head, they can provide comparable (or even better) plaque removal in comparison to a fully bristled brush, but with enhanced gum massaging, and less soft and hard tissue abrasion.

The details of several embodiments are set forth in the accompanying drawings and the description below. Other features and advantages of the disclosure will be apparent from the description and drawings, and from the claims.

### DESCRIPTION OF DRAWINGS

FIG. 1A is a perspective view of a brush refill.
FIG. 1B is an enlarged perspective view of the head portion of the refill of FIG. 1A.
FIG. 1C is an enlarged side view of the head portion of the refill of FIG. 1A.
FIG. 2 is an enlarged perspective view of the field of elongated projections having circular transverse cross-sections shown in FIG. 1A.
FIG. 3 is an enlarged perspective view of the ring structure shown in FIG. 1A.
FIG. 4 is an enlarged perspective view of the field of elongated projections having triangular transverse cross-sections shown in FIG. 1A.
FIG. 5 is an enlarged perspective view of the field of curtains shown in FIG. 1A.
FIG. 6A is an enlarged perspective view of the ladder fin shown in FIG. 1A, while FIG. 6B is a perspective view illustrating attachment of the ladder fin to the head of the refill of FIG. 1A.
FIG. 7 is a perspective view of an alternative head.
FIG. 8 is a perspective view of an alternative head.
FIG. 9 is perspective view of a prophy cup elastomeric element.
FIG. 10 is a perspective view of a rocking, elastomeric textured fin element.
FIG. 11 is a photograph taken from the top of a brush head utilizing the elements of FIGS. 9 and 10.
FIG. 12 is a perspective view of another brush head utilizing the elements of FIGS. 9 and 10.
FIG. 13 is a perspective view of a elastomeric curtain element, illustrating its slicing to form a slit curtain element.
FIG 14 is a perspective view of a brush head including the split curtain element of FIG 13.
FIG 15 is a perspective view of an alternative fin/tube element.
FIG 16 is a perspective view of an alternative elastomeric element.
FIG 17 is a cross-sectional view of a dual-material elastomeric element.

### DETAILED DESCRIPTION

Oral hygiene implements, such as toothbrushes, are described that include many elastomeric elements. The implements include a large number of "sharp" edges formed of compliant elastomeric materials for enhanced cleaning with reduced abrasion. The implements can provide many different textures in a user's mouth and can be reminiscent of the more traditional bristled implements, allowing for the novel implements to be readily accepted into a consumer's daily routine.

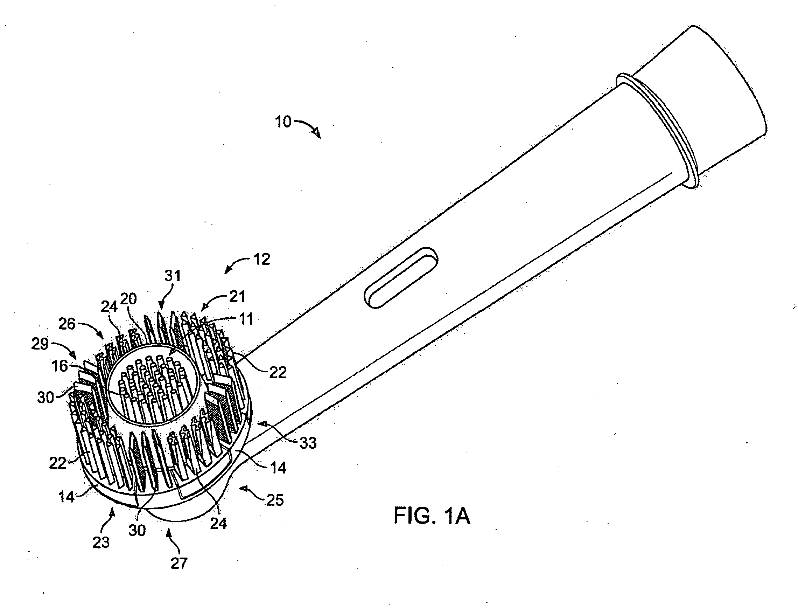

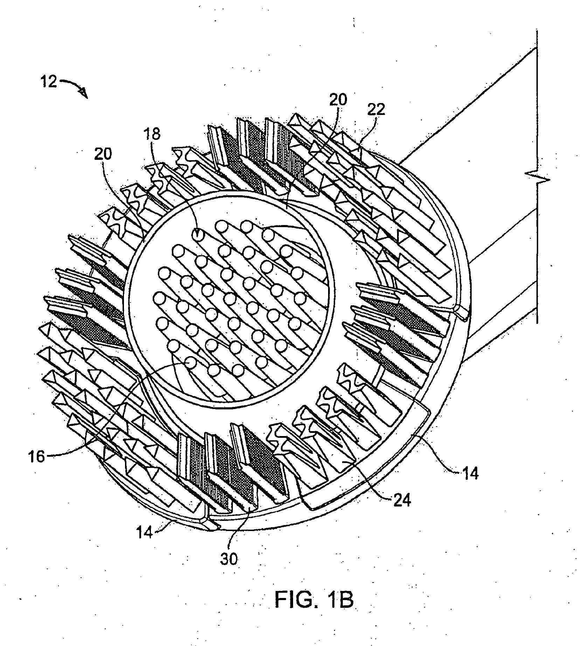

By way of example, and by reference to FIGS. 1A-1C, a refill 10 for a power toothbrush, such as one driven by electrical energy, includes a head portion 12 sized for insertion into a human mouth that includes a base 14 and a plurality of elastomeric elements extending from the base to define a field of elastomeric elements. The entire refill itself and/or the head portion 12 can be configured to be oscillated, e.g., rotationally oscillated, and/or vibrated, to provide powerful cleaning and/or massaging action to a user's oral cavity. In the particular implementation shown in FIGS. 1A-1C, the field of elastomeric elements includes (1) a portion 11 that includes a plurality of first elastomeric elements 16 in the form of rod-like projections that are each substantially circular in transverse cross-section and taper along their length to their respective terminal end 18; (2) a second elastomeric element 20 in the form of a concentric ring; (3) two portions 21 and 23 that each include a plurality of third elastomeric elements 22 in the form of projections that are each substantially triangular in transverse cross-section; (4) two portions 25 and 26 that each include a plurality of fourth elastomeric elements 24 in the form of curtains or sinuous walls; and (5) four portions 27, 29, 31 and 33 that each include a fifth elastomeric element (in this case each portion includes three elements) in the form of fins 30 that have a ladder-like appearance and texture along a length of their sides.

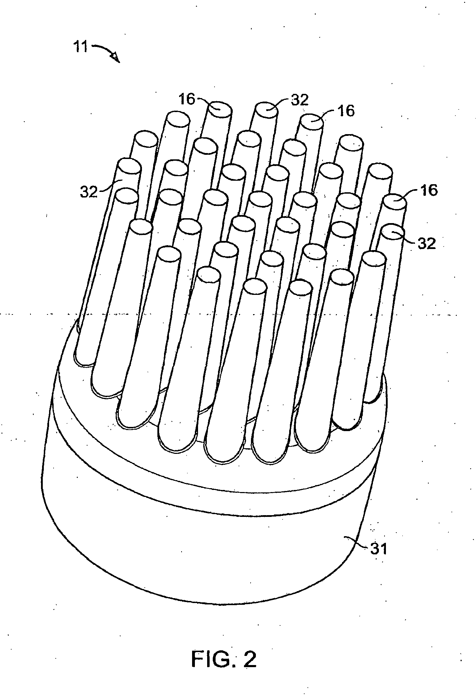

FIGS. 2-6 show the elastomeric elements of refill 10 in more detail.

Referring to FIG. 2, portion 11 (shown disassembled from refill 10) includes a base portion 31 from which the projections extend 1.6 extend. The base portion can be formed of the same material as the projections (or not) and can be solid. If more compliance is desired, especially vertically in the direction of a user's teeth, the base can be hollow to provide a more flexible base. Generally, projections 16 are configured to present numerous "sharp" edges 32 to the surface of the teeth to overcome the adhesion of plaque to the surface of the teeth. While projections 16 are shown in FIG. 2 as having a substantially circular transverse cross-section, they can be formed in a variety of cross-sections, such triangular, square, pentagonal, hexagonal or octagonal.

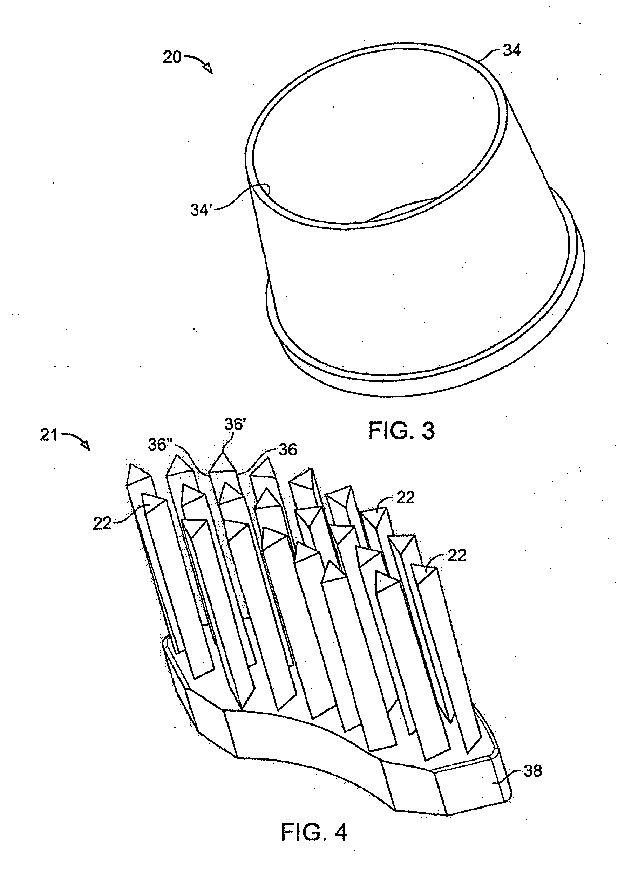

Referring to FIG. 3, concentric elastomeric ring 20 presents only two edges 34 and 34' to the teeth and gums, and so is generally not as efficient of a plaque removing element (when compared to element 16), especially in harder to reach places, such as between the teeth. Nevertheless, ring 20 provides sound structural support and stability to other elements in the brush head, and provides good buccal surface cleaning, as well as a powerful massaging effect. In addition, elastomeric element 20 can work synergistically with tooth cleaning formulations, such as tooth powders and pastes, by acting to hold or contain various formulations against tooth surfaces. This action can improve the polishing and/or whitening effect of a particular formulation.

Referring to FIG. 4, portion 21 (shown disassembled from refill 10) includes a base portion 38 from which the elastomeric projections extend 22. The base portion can be formed of the same material as the projections (or not) and can be solid (if desired). If more compliance is desired, especially vertically in the direction of a user's teeth, the base can be hollow to provide a more flexible base. Generally, projections 22 (much like projections 16) are configured to present numerous "sharp" edges, such as edges 36, 36' and 36", to the surface of the teeth to overcome the adhesion of plaque to the surface of the teeth.

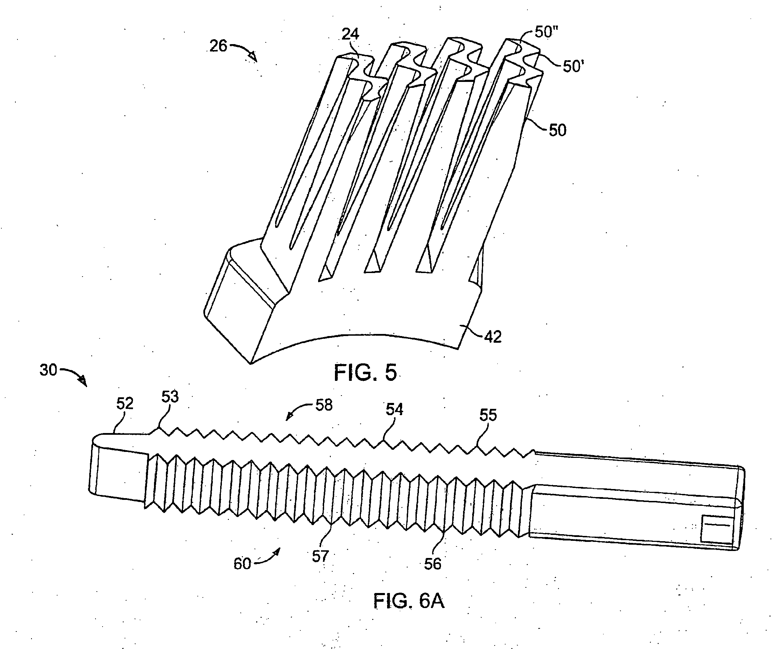

Referring to FIG. 5, portion 26 (shown disassembled from refill 10) includes a base portion 42 from which the elastomeric projections extend 24. The base portion can be formed of the same material (or not) as the projections and can be solid (if desired). If more compliance is desired, especially vertically in the direction of a user's teeth, the base can be hollow to provide a more flexible base. Generally, projections 24 (much like projections 16 and 22) are configured to present numerous "sharp" edges, such edges 50, 50' and 50", to the surface of the teeth to overcome the adhesion of plaque to the surface of the teeth.

Referring to FIG. 6A, elastomeric element 30 (shown disassembled from refill 10) are configured to present numerous "sharp" edges, such edges 52 defined at terminal ends of each element 30 and edges 53-57 defined by wedge-shaped features along sides 58 and 60 of element 30, to the surface of the teeth to overcome the adhesion of plaque to the surface of the teeth. Elastomeric fin elements 30 serve at least two functions. First, they provide excellent cleaning power with their numerous "sharp" edges. Secondly, they provide interdental registration for both cleaning and sensory cues.

More generally now, the shapes utilized, the total number of "sharp" edges, the material used to form each element, the hardness of the elastomer used to form each element, the length of extension from the base of each element, and the dimensions the elastomeric elements are chosen to maximize cleaning and massaging action of the oral hygiene implement, while minimizing trauma to tissues of the mouth, such as the soft tissue on the gums.

Not only can each elastomeric element have a unique three-dimensional shape, but each element can be formed of a different elastomeric material. For example, each elastomeric element can be formed from a thermoplastic elastomer or crosslinked elastomer.

Examples of elastomers include styrenic block copolymers, e.g., styrene-ethylenebutylene-styrene copolymer (SEBS), styrene-butadiene-styrene copolymers, polyurethanes, e.g., polyether or polyester-based polyurethanes, such as those available under the tradename PELLETHANE^{®}, silicones, polyether amides, such as those available under the tradename PEBAX^{®}, polyether polyesters, such as those available under the tradename HYTREL^{®} or mixtures of any of these or other elastomers. In some implementations, elastomers can be blended with various thermoplastics that are considered to be non-elastomers to provide an elastomeric blend. For example, polypropylene can be mixed with styrenic elastomers, such as SEBS, to provide an elastomeric blend.

The elastomeric material used to form the elastomeric elements described herein has a Shore A hardness of from about 8 Shore A to about 95 Shore A. In some implementations, the elastomeric material used to form the elements has a Shore A hardness of less than about 95, e.g., less than 85, 75, 65, 55, 45, 35, 25, 15, or even less than 10 Shore A.

Any elastomeric material used to form the elastomeric elements can be filled with one or more fillers. Examples of fillers include oils, e.g., mineral oil, abrasives, e.g., alumina, silica or kaolin, tackifiers, e.g., rosins, plasticizers or mixtures of any of these fillers or others.

While the refill head of FIG. 1A includes five different three-dimensional shapes of elastomeric elements, many other configurations are possible. For example, and more generally, oral hygiene implements, such as toothbrushes (manual or electric) or refills, can include several-to-many different shaped elastomeric elements, e.g., two, three, four, five, six, seven, eight, or even ten or more different three-dimensionally shaped elements. If desired, each elastomeric element can be made of the same or a different material. In some implementations, each elastomeric element is formed of a different material. In some implementations, the elastomeric elements in a field of elastomeric elements may be formed of several different materials, e.g., two, three, four, five, six, seven, eight, or even ten or more different materials. The combination of the different shapes and materials can, e.g., provide many different textures in a user's mouth that can be reminiscent of more traditional bristled implements, allowing for the novel implements to be readily accepted into a consumer's daily routine.

Generally, the elastomeric elements in a field of elastomeric elements in an oral hygiene implement define a total of more than 250 edges that have a tip radius of less than about 0.006 inch. The number of "sharp" edges can be determined by using an optical comparator and manually counting the number of edges meeting this condition, or, alternatively, the number of edges can be determined by taking photographs and using an image analysis software, such as OPTIMAS, to count the number of edges meeting this condition. In still another procedure, the implement can be scanned in three dimensions to create a three-dimensional database, and then the database, e.g., an IGES file, can be analyzed for edges meeting this condition. In some implementations, there are many more total edges. For example, the total number of edges can be greater than about 300, such as greater than about 400, 500, 600, 700, 800, 900, 1000, 1250, 1500, or even more, such as greater than about 2000 or 3000. Generally, elastomeric edges have a lower plaque removing efficacy when compared on a one-to-one basis to relatively hard plastic bristle edges (bristle tips) because of the compliant nature of the elastomeric edges. Nevertheless, the oral hygiene implements fashioned from elastomeric elements, as described herein, generally are as effective or more effective than hard-bristled toothbrushes because of the number of cleaning edges, especially spaced-apart cleaning edges, and because, unlike hard-bristle edges, the elastomeric elements can clean from their sides as well as from their tips.

In some implementations, the one or more edges are substantially exposed so that they may contact a surface of the oral cavity. One way to control exposure of the edges is to control intra- or inter-element edge spacing. In some embodiments, the edges can have an intra- and/or inter-element spacing to its nearest neighbor of about 0.010 inch or more, such as greater than 0.015 inch, 0.020 inch, 0.025 inch, 0.030 inch, 0.040 inch, or 0.050 inch or more, such as greater than about 0.060 inch, 0.075 inch, 0.085 inch, 0.10 inch, 0.125 inch, 0.150 inch, 0.175 inch, or even greater than 0.20 inch.

One way to control the aggressiveness of the elements is to control their transverse cross-section. In some implementations, any elastomeric element described herein can have a first maximum transverse cross-sectional thickness of between about 0.003 inch and about 0.250 inch, such as between about 0.010 inch and about 0.10 inch. In some implementations, the elastomeric elements also have a second maximum transverse dimension perpendicular to the first direction of about 0.003 inch and about 0.250 inch, such as between about 0.010 inch and about 0.10 inch.

One way to control the flexibility, and thus aggressiveness of the elements is to control their maximum length of extension from a top surface of the base from which they extend. For example, the maximum length of extension can be from about 0.20 inch to about 0.75 inch, such as between about 0.250 inch and about 0.50 inch.

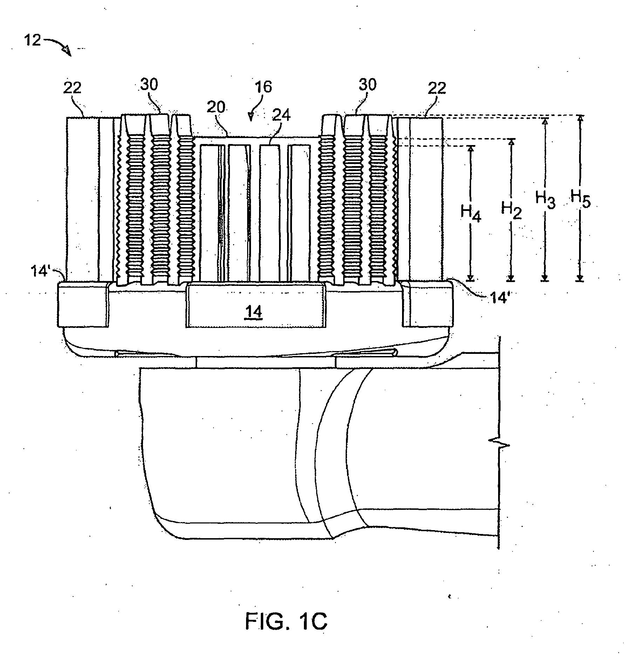

Referring back now to FIGS. 1A-1C, in the particular embodiment shown, the number of edges having tip radii of less than 0.006 inch is about 756, while the surface area of the ends of the elements is approximately 5-15 times that of a bristled head having roughly the same nominal base area. Each element of the refill 10 is formed of an oil-filled SEBS, a thermoplastic polyether-polyurethane or a silicone. The hardness of the elastomer of the first, second, third, fourth and fifth elements, 16, 20, 22, 24 and 30 is 65 Shore A, 50 Shore A, 90 Shore A, 40 Shore A and 82 Shore A, respectively. Referring particularly to FIG. 1C, first, second, third, fourth and fifth elements, 16, 20, 22, 24 and 30 extend from a top surface 14' of base 14 a distance of 9.250 inch, 0.249 inch (H₂), 0.281 inch (H₃), 0.236 inch (H₄) and 0.288 (H₅), respectively.

Referring back now to FIGS. 2 and 4, in some embodiments, the diameter of the circles or inscribed circles of elements 16 or 22 can be as large as 0.020 inch, 0.030 inch or even 0.040 inch. In some implementations, the diameter is 0.020 inch or less. In some embodiments, a center-to-center spacing between elements ranges from about 0.025 inch to about 0.040 inch. In some embodiments, edge radii are maintained at less than 0.003 inch to maximize cleaning, while material hardness is maintained between about 40 Shore A and about 90 Shore A to maintain gentleness. In some implementations, elements 16 or 22 extend from a support structure that is solid or hollow.

Referring back now to FIG. 3, in some embodiments, ring element 20 has a wall thickness of from about 0.015 inch to about 0.050 inch, e.g., from about 0.020 inch to about 0.040 inch. In some implementations, the hardness of the material used to form element 20 is from about 15 Shore A to about 60 Shore A. In some embodiments, the ring is open (as shown), while in other embodiments, the ring can be configured with its open end down, such that a closed elastomeric surface presents itself to tissue and tooth surfaces.

Referring back now to FIG. 5, in some embodiments, sinuous wall elements 24 can have amplitude of from about 0.005 inch to about 0.030 inch, such as between about 0.010 inch to about 0.020 inch. In some implementations, the peak-to-peak distance may be from about 0.010 inch to about 0.075 inch, such as between about 0.015 inch and about 0.060 inch. For example, the wall element can be formed of an elastomer that has a hardness of between about 10 Shore A and about 80 Shore A, such as between about 20 and about 60 Shore A.

Referring back now to FIG. 6A, in some embodiments, elastomeric textured fin element 30 can have a rectangular cross-section, e.g., with a 3/1 aspect ratio. For example, the smaller dimension can be 0.030 inch or less. For example, the center-to-center spacing between wedge shaped elements can be between about 0.010 inch and about 0.075 inch, while a maximum depth between wedged shaped elements can be, e.g., between about 0.010 inch and about 0.075 inch. For example, the hardness of the material used to form the element can be between about 50 Shore A and about 95 Shore A.

The elastomeric elements described herein can be formed using a variety of techniques. For example, the elements can be extruded, injection molded and or cast. Extrusion can be advantageous in some embodiments because of its high speed and because it can impart molecular orientation to the element, which can enhance wear resistance. On the other hand, injection molding can be advantageous in other embodiments because of its versatility to provide many different shapes and configurations.

The elastomeric elements described herein can be assembled into the implements using a variety of techniques. For example, they can be overmolded onto a substrate, such as a base, or they can be assembled by using an adhesive or solvent bonding. The elements can also be formed such that they can be press-fit into a platform. Overmolding can be advantageous in some implementations because of its high speed and general applicability to large scale manufacturing processes.

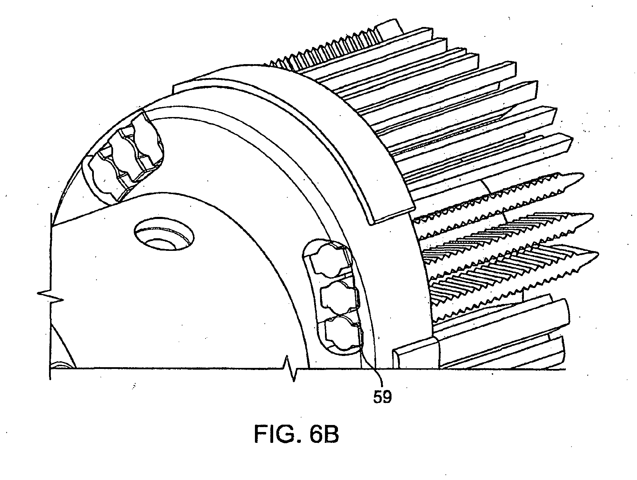

As can be seen from FIGS. 2, 4 and 5, groups of elements can extend from a base, which can be bonded, e.g., by using an adhesive or a solvent, to a complementary head portion to form a flat upper surface 14'. As can be seen from FIG. 6B, elements can be formed so that they can be press fit into a complementary portion 59 of the brush head. Such as press fit can optionally be made permanent by applying an adhesive. These types of techniques can be advantageously utilized to rapidly make prototypes that can be tested in the laboratory and with consumers.

Many other brush head configurations and/or elastomeric elements are possible.

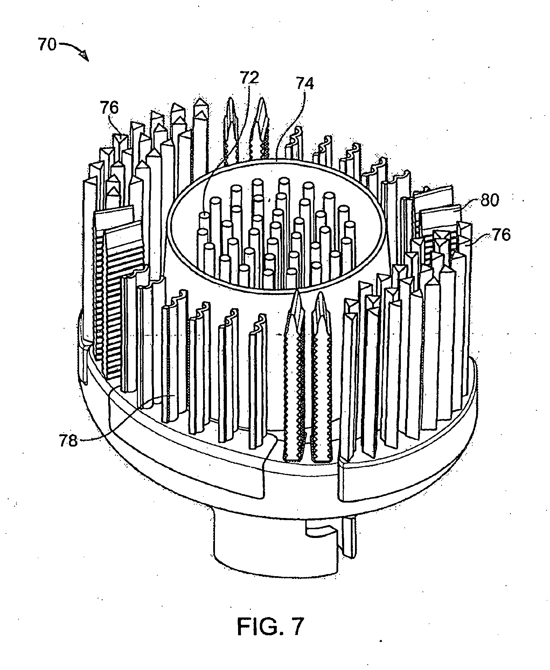

For example, FIG. 7 shows an alternative brush head 70 that includes five different shaped elastomeric elements 72, 74, 76, 78 and 80. Much like the brush head of FIG. 1A, brush head 70 includes an inner field that includes elongated projections that have a circular transverse cross-section, which are surrounded by annular ring 74. Also, much like the head shown in FIG. 1A, the outer field includes elongated projections 76 that are triangular in shape, sinuous curtain or wall elements 78, and textured fin elements 80. Relative to the head of FIG. 1A, the head of FIG. 7 includes more curtain elements and (12 versus 8) and fewer textured fin elements (8 versus 12).

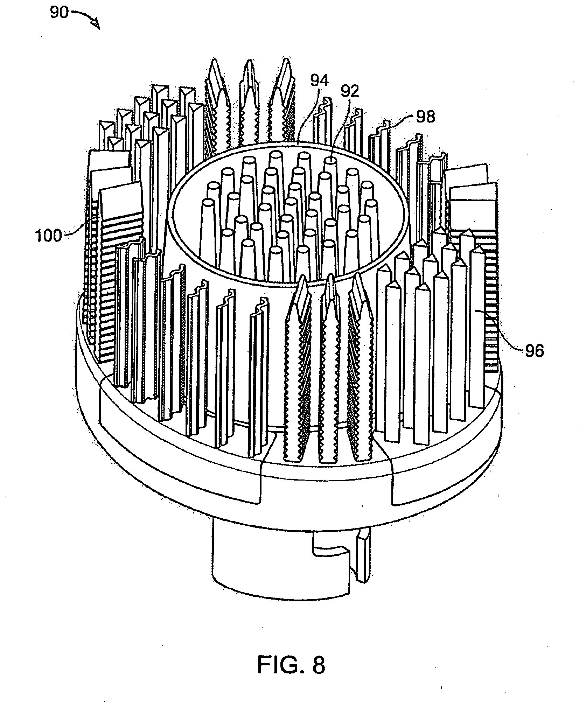

FIG. 8 shows another alternative brush head 80 that includes five different shaped elastomeric elements 92, 94, 96, 98 and 100. Much like the brush heads of FIGS. 1A and 7, brush head 90 includes an inner field that includes elongated projections that have a circular transverse cross-section, which are surrounded by annular ring 94. Also, much like the heads shown in FIGS. 1A and 7, the outer field includes elongated projections 96 that are triangular in shape, sinuous curtain or wall elements 98, and textured fin elements 100. Relative to the head of FIG. 1A, the head of FIG. 8 includes more curtain elements and (12 versus 8) and fewer elongated projections that are triangular in cross-section (26 versus 44).

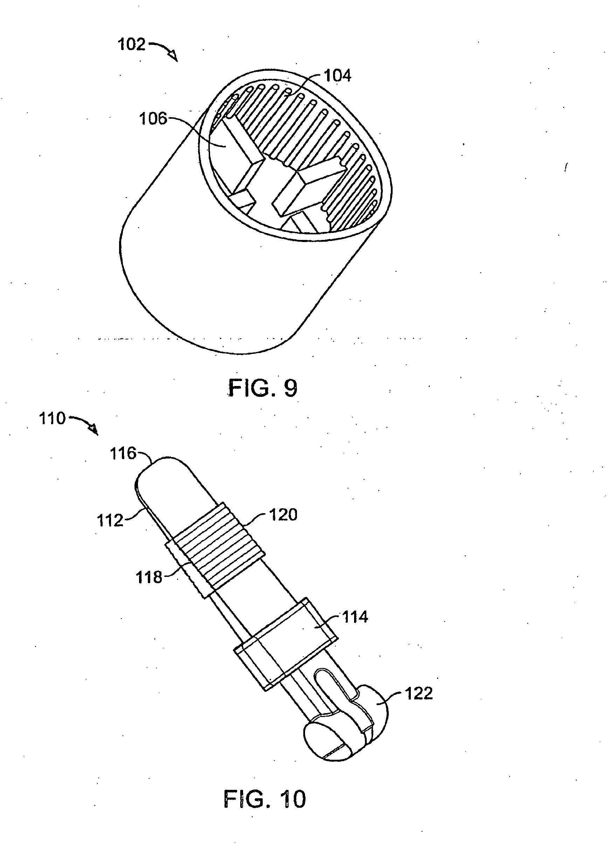

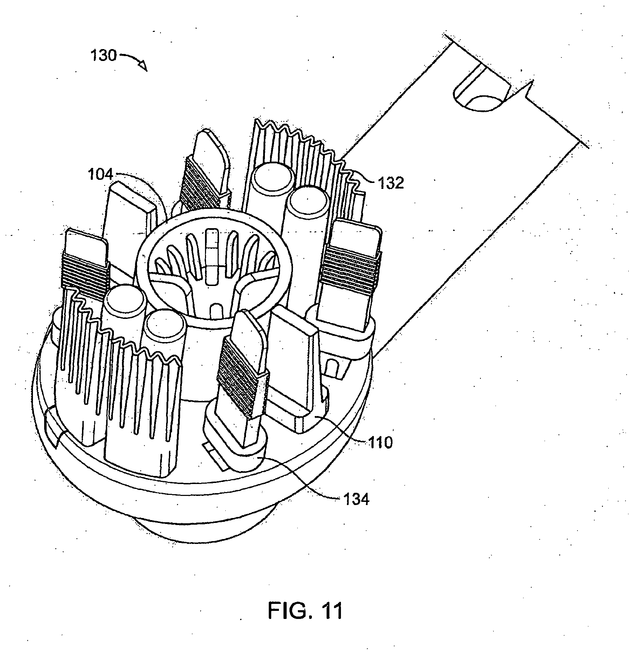

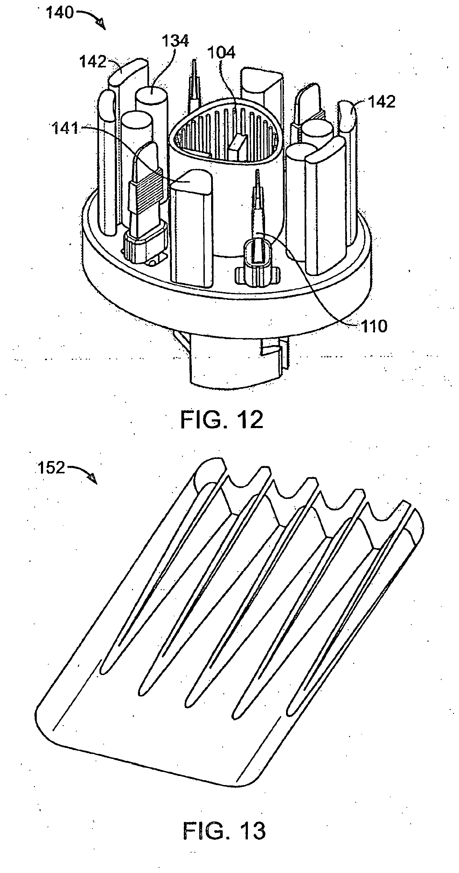

FIGS. 9 and 10 show several alternative elastomeric elements, while FIGS. 11 and 12 show head embodiments that include the elements of FIGS. 9 and 10. In particular, FIG. 9 shows an elastomeric prophy cup element 102 that has an open end 104 configured to accept a tooth for cleaning and polishing. Element 102 includes a number of cleaning features 104 and 106 and also a number of edges. FIG. 10 shows an elastomeric pivoting textured fin element 110 that includes a body portion 112 that extends and tapers from a base portion 114 to a thin terminal end 116. The body portion carries a textured element 118 that includes a plurality of textures ridges 120. The base portion 114 is connected to a snap 122 that allows the element to be fixed to a oral hygiene implement, such as a toothbrush. Rocking or pivoting turfs and elements are described in Braun et al., U.S. Patent No. 6,993,804 and 6,553,604, and Chenvainu, Published U.S. Patent Application No. 2005/0060822. FIG. 11 shows a power refill 130 that incorporates the prophy element 104 of FIG. 9 and the pivoting element 110 of FIG. 10, along with elastomeric curtain elements 132 and elastomeric rod elements 134. FIG. 12 shows a brush head 140 that incorporates the prophy element 104 of FIG. 9 and the rocking element of FIG. 10, along with rod elements 134, elastomeric projections 141 that have radiused triangular cross-sections, and elastomeric curtain or wall elements 142.

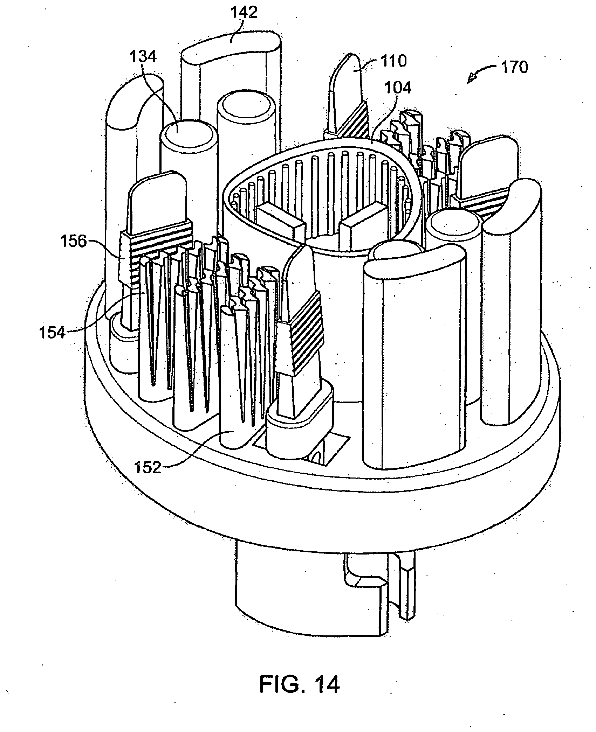

Any of the elements described herein can be slit to create a number of independent elements along with a number of "sharp" edges. Referring now to FIG. 13, a sinuous curtain can be slit along the lines shown to produce an elastomeric slit curtain element 152 that includes six independent elements 154, 155, 156, 156, 158 and 160. FIG. 14 shows a brush head 170 with such a spit curtain.

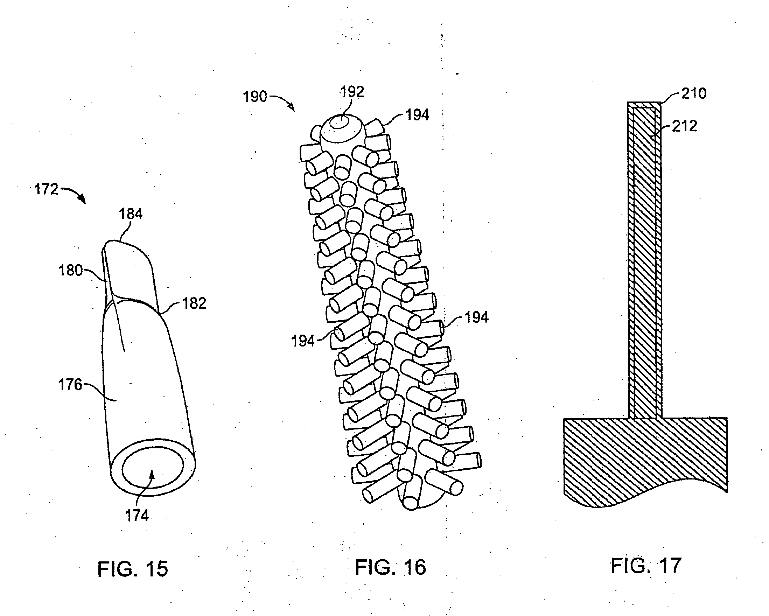

Referring now to FIG. 15, another type of elastomeric element that can be utilized is a tubular fin element 172. The element includes a hollow interior 174, a tubular body 176 and a fin 180 extending from and tapering from a closed top surface 182 of the tubular body to a thinned terminal end 184.

Referring now to FIG. 16, yet another type of elastomeric element that can be utilized is a tree type element 190 that includes a central shaft 192 and a plurality of projections 194 extending outwardly from the shaft. In the embodiment shown, a long axis of each projection is generally perpendicular to a long axis of the shaft. In other embodiments, the long axis of one or more projections makes an angle with respect to the long axis of the shaft that other than 90 degrees.

### OTHER EMBODIMENTS

A number of embodiments have been described. Nevertheless, it will be understood that various modifications may be made without departing from the scope of the claims.

For example, any oral hygiene implement can include hollow elastomeric tubular structures, e.g., that are open on an end. For example, the tubular structures can have a circular in transverse cross-section. For example, the hollow tubular structures can have a wall thickness of about 0.005 inch to about 0.020 inch, e.g., 0.008 inch to about 0.015 inch. Material hardness of the tubes can be, e.g., from about 30 Shore A to about 85 Shore A, e.g., from about 40 Shore A to about 80 Shore A.

While embodiments have been described that are in the form of a power toothbrush, other forms are possible for the oral hygiene implements. For example, the implements can be in the form of a manual toothbrush.

While embodiments have been described that include only elastomeric elements, embodiments are possible that include bristles, such as those formed of a nylon, e.g., nylon 6,12 or polyester, in addition to the elastomeric bristles.

While embodiments have been described in which the elements are formed of a single material throughout its cross-section, in some embodiments, the elements are formed of more than a single material, e.g., two, three, or even four different materials, e.g., that are arranged in discrete portions, such as layers of the element. For example, a central portion of an element can be formed of a first material having a first hardness and an outer portion of the element, such as one that contacts oral tissues and/or teeth, can be formed of a second material having a second hardness, that is more or less than the first hardness. An implementation in which a softer material 210 surrounds a harder material 212 is shown in FIG 17. For example, the first material can have a hardness of about 75 Shore A, while the second material can have a hardness of about 30 Shore A.

Some of the elements have a different coefficient of friction, as measured when wet with human saliva using an atomic force microscope. Some of the elements are formed of an elastomer that has a relatively high coefficient of friction when wet, e.g., 0.5 to about 0.9, while others have a relatively low coefficient of friction, e.g., 0.05 to about 0.3. High coefficients of friction can be obtained, e.g., by adding a rosin to an elastomer from which an element is formed, and low coefficients of friction can be obtained, e.g., by adding an oil to an elastomer from which the element is formed. Low coefficients are advantageous for slipping between teeth, while high coefficients of friction are advantageous for scrubbing the teeth.

Still other embodiments are within the scope of the following appended claims.

## Claims

1. A toothbrush or toothbrush refill having a head portion (12) sized for insertion into a human mouth, the head portion comprising: a base (14, 114); and a plurality of elastomeric elements (16, 20, 22, 24, 30) extending from the base, each elastomeric element defining one or more edges, a total number of edges defined by the plurality of elastomeric elements having a tip radius of less than about 0.1524 mm is greater than about 250 and the Shore A hardness of the elastomeric elements in a range of between 8 Shore A and 95 Shore A and an intra- and/or inter-element spacing of the edges to their nearest neighbors is 0.254 mm or more, some of the elastomeric elements including a first elastomeric material having a first coefficient of friction for sliding between teeth and some of the elastomeric elements including a second elastomeric material having a second coefficient of friction higher than the first coefficient of friction for scrubbing the teeth.

2. The oral hygiene implement of claim 1, wherein one or more elastomeric elements have a long axis running in a direction of extension, and in that the edges are defined along the direction of extension.

3. The implement of any one of the preceding claims, wherein one or more elastomeric elements have a long axis running in a direction of extension, and in that the edges are defined in a direction perpendicular to extension.

4. The implement of any of the preceding claims, wherein the plurality of elastomeric elements comprise a first elastomeric element comprising a first elastomeric material and a second elastomeric element comprising a second elastomeric material.

5. The implement of claim 4, wherein the plurality of elastomeric elements further comprise a third elastomeric element comprising a third elastomeric material.

6. The implement of any of the preceding claims, wherein one or more of the plurality of elastomeric elements comprises a filler and in that the filler is selected from the group consisting of oil, abrasives, tackifiers, plasticizers, and mixtures thereof.

7. The implement of any one of the above claims, wherein the base further comprises one or more bristles, such as bristles arranged in one or more turfs, extending from the base.

8. The implement of any one of the above claims, wherein the Shore A hardness of the elastomeric implements is in a range of between 35 Shore A and 92 Shore A.

## Patentansprüche

1. Zahnbürste oder Zahnbürstenersatz, die einen Kopfabschnitt (12) aufweisen, der zum Einführen in einen menschlichen Mund bemessen ist, der Kopfabschnitt umfassend: einen Grundkörper (14, 114); und eine Vielzahl von elastomeren Elementen (16, 20, 22, 24, 30), die sich von dem Grundkörper erstrecken, wobei jedes elastomere Element eine oder mehrere Kanten definiert, wobei eine Gesamtzahl von Kanten, die durch die Vielzahl von elastomeren Elementen bestimmt ist, die einen Spitzenradius von weniger als etwa 0,1524 mm aufweisen, größer als etwa 250 ist und die Shore A-Härte der elastomeren Elemente in einem Bereich von zwischen 8 Shore A und 95 Shore A liegt, und ein Intra- und/oder Zwischenelementabstand der Kanten zu ihren nächsten Nachbarn 0,254 mm oder mehr beträgt, wobei einige der elastomeren Elemente ein erstes Elastomermaterial einschließen, das einen ersten Reibungskoeffizienten zum Gleiten zwischen Zähnen aufweist, und wobei einige der elastomeren Elemente ein zweites Elastomermaterial einschließen, das einen zweiten Reibungskoeffizienten, der höher als der erste Reibungskoeffizient ist, um die Zähne zu Rubbeln, aufweist.

2. Mundhygienehilfsmittel nach Anspruch 1, wobei ein oder mehrere elastomere Elemente eine Längsachse aufweisen, die in einer Erstreckungsrichtung verläuft und die Kanten entlang der Erstreckungsrichtung bestimmt sind.

3. Hilfsmittel nach einem der vorstehenden Ansprüche, wobei ein oder mehrere elastomere Elemente eine Längsachse aufweisen, die in einer Erstreckungsrichtung verläuft und die Kanten in einer Richtung lotrecht zu der Erstreckung bestimmt sind.

4. Hilfsmittel nach einem der vorstehenden Ansprüche, wobei die Vielzahl von elastomeren Elementen ein erstes elastomeres Element umfasst, umfassend ein erstes Elastomermaterial und ein zweites elastomeres Element umfassend ein zweites Elastomermaterial.

5. Hilfsmittel nach Anspruch 4, wobei die Vielzahl von elastomeren Elementen ferner ein drittes elastomeres Element umfasst, umfassend ein drittes Elastomermaterial.

6. Hilfsmittel nach einem der vorstehenden Ansprüche, wobei eines oder mehrere der Vielzahl von elastomeren Elementen ein Füllmittel umfassen und das Füllmittel aus der Gruppe ausgewählt ist, bestehend aus Öl, Schleifmitteln, Klebrigmachern, Weichmachern und Mischungen davon.

7. Hilfsmittel nach einem der vorhergehenden Ansprüche, wobei der Grundkörper ferner eine oder mehrere Borsten umfasst, wie Borsten, die in einem oder mehreren Büscheln angeordnet sind, die sich von dem Grundkörper erstrecken.

8. Hilfsmittel nach einem der vorhergehenden Ansprüche, wobei die Shore A-Härte der Elastomerhilfsmittel in einem Bereich zwischen 35 Shore A und 92 Shore A liegt.

## Revendications

1. Brosse à dents ou recharge de brosse à dents présentant une partie tête (12) dimensionnée pour une insertion dans une bouche humaine, la partie tête comprenant : une base (14, 114) ; et une pluralité d'éléments élastomères (16, 20, 22, 24, 30) s'étendant à partir de la base, chaque élément élastomère définissant un ou plusieurs bords, un nombre total de bords définis par la pluralité d'éléments élastomères présentant un rayon de pointe inférieur à environ 0,1524 mm étant supérieur à environ 250 et la dureté Shore A des éléments élastomères dans une plage comprise entre 8 Shore A et 95 Shore A et un espacement intra- et/ou inter-éléments des bords à leurs plus proches voisins étant de 0,254 mm ou plus, certains des éléments élastomères comportant un premier matériau élastomère présentant un premier coefficient de frottement pour le glissement entre les dents et certains des éléments élastomères comportant un deuxième matériau élastomère présentant un deuxième coefficient de frottement supérieur au premier coefficient de frottement pour le nettoyage des dents.

2. Instrument d'hygiène buccale selon la revendication 1, dans lequel un ou plusieurs éléments élastomères ont un axe long s'étendant dans une direction d'extension, et les bords sont définis le long de la direction d'extension.

3. Instrument selon l'une quelconque revendication précédente, dans lequel un ou plusieurs éléments élastomères ont un axe long passant dans une direction d'extension, et les bords sont définis dans une direction perpendiculaire à l'extension.

4. Instrument selon l'une quelconque revendication précédente, dans lequel la pluralité d'éléments élastomères comprend un premier élément élastomère comprenant un premier matériau élastomère et un deuxième élément élastomère comprenant un deuxième matériau élastomère.

5. Instrument selon la revendication 4, dans lequel la pluralité d'éléments élastomères comprend en outre un troisième élément élastomère comprenant un troisième matériau élastomère.

6. Instrument selon l'une quelconque revendication précédente, dans lequel un ou plusieurs de la pluralité d'éléments élastomères comprend une charge et la charge est choisie dans le groupe constitué par une huile, des abrasifs, des agents collants, des plastifiants, et leurs mélanges.

7. Instrument selon l'une quelconque des revendications précédentes, dans lequel la base comprend en outre un ou plusieurs poils, tels que des poils disposés en une ou plusieurs touffes, s'étendant à partir de la base.

8. Instrument selon l'une quelconque des revendications précédentes, dans lequel la dureté Shore A des instruments élastomères se trouve dans une plage comprise entre 35 Shore A et 92 Shore A.
